# EUROPEAN PATENT APPLICATION

(11) **EP 1 435 558 A1**
(43) Date of publication of application: **07.07.2004**
(21) Application number: 03290002.9
(22) Date of filing: 02.01.2003
(51) Int. Cl.: G06F 1/00, G06F 7/58, H04L 9/32

(54) **On-device random number generator**

(71) Applicant: Texas Instruments Incorporated, Dallas, Texas 75251 (US); Texas Instruments France, 06271 Villeneuve Loubet Cedex, Nice (FR)
(72) Inventor: Chateau, Alain, 06800 Cagnes sur Mer (FR); Dahan, Franck, 06200 Nice (FR)
(74) Representative: Holt, Michael

(57) **Abstract**

A random key generator circuit (10) generates a random number internal to an integrated circuit and stores the random number as a "root key" in a memory (18) on the integrated circuit. The output of the Root Key memory (18) is only accessible internal to the integrated circuit. The root key can be permanently stored in a fused memory or other memory type which is protected from erasure or reprogramming once the root key is stored.

## Description

### BACKGROUND OF THE INVENTION

### TECHNICAL FIELD

This invention relates in general to electronic circuits and, more particularly, to a random number generator circuit with permanent storage.

### DESCRIPTION OF THE RELATED ART

In many processing devices, such as computers, PDAs (personal digital assistants), mobile phones, and smart phones, it is necessary to maintain complete secrecy of certain data. One application, for example, would be financial transactions, where important information may stored on the processing device or a memory external to the processing device. It is important that a third party could not access the processing device's memory in order to ascertain sensitive information. In some cases, there may be a need for information to be stored on the processing device that is to be maintained in secrecy even from the owner.

A typical method of storing sensitive information is by encryption. There are various encryption techniques, but a typical technique uses a "cipher" to encrypt data according to a "key". The cipher is the mathematical formula used to encrypt the data. The key is used by cipher in the encryption.

The encrypted data is unintelligible. Modern day encryption techniques, which use 64-bit and 128-bit keys, are unbreakable for almost all practical situations. However, if the key is known, then the encrypted data can be easily decrypted.

Some current day processing devices use the circuit's die identification number (die ID) as the key. The die ID is unique for each processing circuit and is typically stored in a fused memory (eFuse) on the integrated circuit. While the die ID is not readily accessible, it can be read by those with access to proper equipment; hence, it is not absolutely secret. It can also be accessed by personnel during manufacturing. Disclosure of the die ID, however, does not allow decryption of secret data on another device using the same key, since the die ID is unique for each device.

Another technique is storing a writing previously generated random number to a memory on each integrated circuit at the time of manufacture. While this is an improvement, it would still be possible for those involved in the manufacturing stages of the processing circuit to trace keys to particular devices.

Therefore, a need has arisen for a completely secret key that is not accessible before, during or after manufacture of the processing circuit.

### SUMMARY OF THE INVENTION

In the present invention, a key is generated on an integrated circuit by generating a random number in a random number generator implemented on the integrated circuit and a memory internal to the integrated circuit for receiving and permanently storing the random number, where memory is accessible only internally to the integrated circuit.

The present invention provides significant advantages over the prior art. The key is generated internal to the integrated circuit and is therefore not known to manufacturing personnel. External access to the key, either directly or indirectly through externally modifiable program code is prevented. Because the key is accessible only internally, it cannot be easily discovered from external means without destruction of the integrated circuit.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a block diagram of a circuit for generation and storage of a random key on a processing circuit;
Figure 2 illustrates the key generation circuit of Figure 1 implemented in a device for mobile communications.

### DETAILED DESCRIPTION OF THE INVENTION

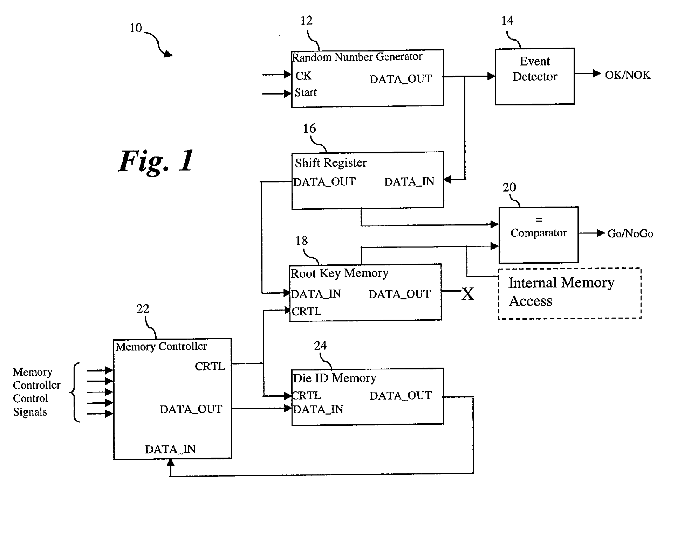

The present invention is best understood in relation to Figures 1 - 2 of the drawings, like numerals being used for like elements of the various drawings.

Figure 1 illustrates a block diagram of a random key circuit 10 for non-volatile storage of a random key on a processing circuit. A random number generator 12 generates a random number in response to clock (CK) and Start signals. An event detector 14 and a shift register 16 receive the output of the random number generator 12. The shift register 16 outputs a serial representation of the random number to a root key memory 18. Parallel outputs from the shift register 16 and Root Key memory 18 are input to a comparator 20. The serial output of the shift register 16 are stored in the root key memory 18 under control of a memory controller 22. The memory controller 22 can also be used to store the die ID in a Die ID memory 24 (not part of the random key circuit 10). The output of the Die ID memory 24 is received by the memory controller 22, where it can be accessed by certain devices, such as test equipment. The data output of the Root Key memory 18 is de-coupled from the memory controller. The output of the Root Key memory is available only for memory accesses from internal components, such as a processing device or encryption circuit manufactured on the same integrated circuit die, as described in greater detail below.

The random memory generator 12 can be any conventional circuit that generates a random number responsive to the control signals. In the preferred embodiment, the event detector 14 observes the random number to detect situations where a possible tampering event has occurred or the random number generator 12 is defective, such as a number that has a ratio of "1"s to "0"s that is outside of a threshold. For example, if the ratio of "1"s to "0"s is below 1/3 or above 2/3, the event detector may issue a NOK (not okay) signal, and the random number would be regenerated. Since the length of the random number is known, whether the ratio is above or below the thresholds can be determined by counting either the "1"s or "0"s in the generated random number and comparing the count to a threshold.

The comparator 20 compares the output of the shift register 16 with the output of the Root Key memory 18 to ensure that the data was properly stored in the Root Key memory 18. Certain memory types, such as eFuse, are not entirely reliable and fuses may not be fully blown on the first try. If a "NoGo" situation exists (meaning the two numbers did not match), the memory controller 22 will try to store the number again, up to a predetermined number of attempts. Since the number is random and unknown, it is not absolutely necessary to perform this step; however, if less than all of the fuses may be blown during typical store operation of the circuit, the randomness of the number stored in the Root Key memory 18 is reduced.

A number of memory types could be used for the Root Key memory 18. The Root Key memory 18 should be of a permanent type that cannot be erased or reprogrammed after the storage of a random number has been verified (i.e., event detector 14 outputs an OK signal and comparator 20 outputs a GO signal). An eFuse memory is one type of preferred memory, since it has a programming fuse at the start of the chain which can be blown to prevent subsequent programming or erasing (blowing all the fuses). Further, it has a fuse at the end of the chain which disables output to the memory controller 22.

While an eFuse memory can be read by reverse engineering a circuit through physical removal of layers to determine the state of each fuse in the Root Key memory 18; such an action would result in destruction of the device. Since the root key of each device is generated independently of other devices, knowledge of a root key for one device would not provide access to encrypted data on another device.

The random key circuit 10 may be used on any electronic device where a secure key is required. The random key circuit 10 could be implemented, for example, in DSPs (digital signal processors), microprocessors, microcontrollers, and other processing devices.

The random key circuit 10 typically would generate the root key at the place of manufacture, before or after packaging the integrated circuit die. It would also be possible to activate the root key programming upon first use; however, this would provide some possibility that the key was not activated, or was improperly activated, resulting in a root key equal to a default known value, such as "0000...0000".

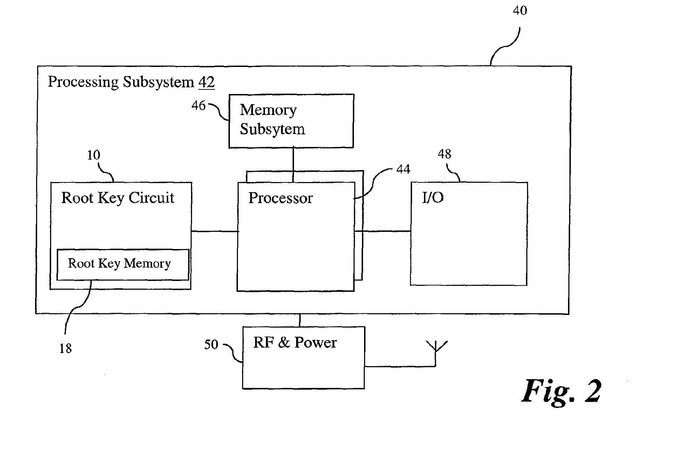

Figure 2 illustrates a block diagram of a mobile communication device 40 which could use the random key generator 10 for financial transactions. A processing integrated circuit 42 includes the root key generator circuit 10 (including random key memory 18), one or more processing/co-processing circuits 44, memory subsystem 46 and input/output circuitry 48. Radio frequency circuitry and power circuitry 50, generally on a separate chip from said processing integrated circuit 42, is coupled to the processing subsystem.

In operation, data is received through the RF and power circuitry 50, which generates digital data from the received analog signals. Certain data may be encrypted and decrypted using one or more programs stored in the memory subsystem 46 and executed on one of the processing circuits 44. Any access to the root key is made internally to the processing integrated circuit 42, such that the root key memory is not accessible through the I/O system 48, either directly or indirectly through the execution of malicious code on a programmable processing circuit 44. In one embodiment, the root key is not used directly to encrypt data, but is used to seed (encrypt before storage) another random number which becomes a session key. In this way, access to the root key by tampering with the code for one or more of the processors 44 is prevented.

The present invention provides significant advantages over the prior art. The key is generated internal to the integrated circuit and is therefore not known to manufacturing personnel. Because the key is accessible only internally to a processor, and is not accessible externally nor internally through the execution of modifiable program code, it cannot be easily discovered without destruction of the integrated circuit.

Several variations to the circuit of Figure 1 could be made. First, the event detector 14 and comparator 20 are optional components that decrease the possibility of the root key having a value with compromised randomness. Second, the root key memory could be of any type that can be programmed and locked from future writes or erasures. At a minimum, a subsequent write or erasure should be detectable such that security measures could be taken in response to any modification of the Root Key memory contents. Third, while the root key generator was discussed specifically in connection with a mobile communication device, it could be used to provide secure encryption/decryption in any processing device.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. Circuitry for generating a random key, comprising:
a random number generator for generating a random number implemented in an integrated circuit;
a memory internal to the integrated circuit for receiving and permanently storing the random number, said memory being accessible only internally to the integrated circuit.

2. The circuitry of claim 1 and further comprising circuitry for detecting undesirable random numbers.

3. The circuitry of claim 2 wherein said detecting circuitry comprises circuitry for detecting a ratio of "1"s and "0"s in said random number and comparing the ratio to a threshold.

4. The circuitry of any one of claims 1 to 3, and further comprising comparison circuitry for comparing the value stored in said memory to the random number.

5. A mobile computing device comprising:
processing circuitry implemented in an integrated circuit;
a random key generator circuit implemented in said integrated circuit and coupled to said processing circuitry, comprising:
a random number generator for generating a random number;
a memory internal to the integrated circuit for receiving and permanently storing the random number, said memory being accessible only internally to the integrated circuit.

6. The mobile computing device of claim 5 wherein said random key generator further comprises circuitry for detecting undesirable random numbers.

7. The mobile computing device of claim 6 wherein said detecting circuitry comprises circuitry for detecting a ratio of "1"s and "0"s in said random number and comparing the ratio to a threshold.

8. The mobile computing device of any one of claims 5 to 7 wherein said random key generator circuit further comprises comparison circuitry for comparing the value stored in said memory to the random number.

9. A method of generating a random key, comprising the steps of:
generating a random number in an integrated circuit;
permanently storing the random number in a memory on said integrated circuit, where said memory is accessible only internally to the integrated circuit.

10. The method of claim 9 and further comprising the steps of identifying undesirable random numbers and regenerating a new random number in response thereto.
